(19) Europäisches Patentamt
European Patent Office
Office européen des brevets

(11) EP 3 147 836 A1

(12) EUROPEAN PATENT APPLICATION

(43) Date of publication:
29.03.2017 Bulletin 2017/13

(51) Int Cl.:
G06Q 10/06 (2012.01)     G06Q 30/00 (2012.01)

(21) Application number: 16190295.2

(22) Date of filing: 23.09.2016

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 25.09.2015 US 201514865771

(71) Applicant: Magenta Corporation Ltd
London W1J 7TF (GB)

(72) Inventors:
• ANDREEV, Vyacheslav
London, N11 2RR (GB)
• TEMPLE, Nadia
London, SE13 5RL (GB)
• BORLAND, Matthew
Syresham, Northamptonshire NN13 5HN (GB)
• DMITRIEV, Anton
443079 Samara (RU)

(74) Representative: Williams, David John
Page White & Farrer
Bedford House
John Street
London
WC1N 2BF (GB)

(54) VEHICLE BOOKING TECHNIQUE

(57) There is disclosed a method of allocating a set of bookings to a set of vehicle, comprising determining a cost associated with all combinations of booking and vehicle, and selecting a vehicle for each booking in dependence on an overall cost of booking/vehicle combinations being the lowest.

Fig. 9

**Description**

BACKGROUND TO THE INVENTION:

Field of the Invention:

The invention is related to transportation services, and is concerned with the optimal assignment of vehicles to bookings in a vehicle booking system.

Description of Related Art:

Transportation companies operating passenger vehicle fleets (including taxicabs, black cars or limousines) need to assign vehicles in real-time to perform customer bookings. Customer bookings can be both pre-booked (for a specific time) and immediate (as-soon-as-possible).

Conventionally a dispatcher assigns and dispatches customer bookings manually. However vehicle locations, driver statuses and customer bookings change in real-time.

Current technology allows current vehicle locations and driver status (e.g. whether a vehicle is occupied) to be monitored manually in real-time.

However a large amount of rapidly changing information makes manual assignment and dispatching unsatisfactory. This increases service cost and lowers customer satisfaction.

There is a high demand for more effective methods of vehicle assignment and dispatching.

It is an aim of the invention to provide an improved automated technique for assigning vehicles to bookings.

SUMMARY OF INVENTION:

In an aspect the invention provides a method of allocating a set of bookings to a set of vehicles, comprising determining a cost associated with all combinations of booking and vehicle, and selecting a vehicle for each booking in dependence on an overall cost of booking/vehicle combinations being the lowest.

The total cost of all assigned combinations is optimised, and the whole set of combinations is assigned simultaneously. The total cost is the sum of costs for all assigned combinations).

The number of bookings and the number of vehicles are preferably equalised before the cost determination. If the number of vehicles is greater than the number of bookings, then a number of dummy booking corresponding to the difference may be added, each having a zero cost function, and if the number of vehicles is less than the number of bookings, then a number of bookings equal to the number of vehicles may be selected in dependence on pick up times.

The cost may be determined for every booking within a predetermined booking window, utilising the vehicles that are available within that window at booking times.

The method may further comprise repeating the cost determination for each combination, such that the previous selection for at least one booking is replaced with a new vehicle, in dependence on a revised overall cost of booking and vehicle combinations being the lowest.The previous selection for more than two bookings may be replaced.

For each selected combination, a determination may be made of the latest time by which the selected combination is to be assigned. At said latest time the vehicle of the combination may be dispatched to the booking of the combination. If the vehicle is unavailable at said latest time, the cost determination may be repeated including said booking.

The cost may be determined in dependence on vehicle data and booking data.

The cost of a booking/vehicle combination may be increased in dependence on one or more of: a service delay per minute; dead mileage; customer grade/driver level mismatch; service type/vehicle type mismatch; and custom bookings/vehicle properties combination.

The cost of a booking/vehicle combination may be decreased in dependence on one or more of: vehicle idle waiting time; and a booking being near to a driver's home.

The method of any preceding claim may comprise receiving booking information, and storing attributes associated with the booking information. The booking information may include one or more of: a pick-up location; a drop-off location; a type of service; and a customer grade. A booking may be a pre-booking for a predetermined time or an as-soon-as-possible booking. For an as-soon-as-possible booking, a booking time may be set as the current time plus a waiting time.

The method may comprise monitoring and storing the location and status of each vehicle.

The method may comprise retrieving routes to last stop from driver status reports for each performing trip, and estimating a completion time of all currently performing trips based on current vehicle location and routes to the last stop.

In an aspect there is provided a system for allocating a set of bookings to a set of vehicles, comprising: a determination processing module for determining a cost associated with allcombinations of booking and vehicle, and a selection processing module for selecting a vehicle for each booking in dependence on an overall cost of booking/vehicle combinations being the lowest.

The system may further comprise a processing module for equalising the number of bookings and the number of vehicles before the cost determination.

The processing module may be configured such that if the number of vehicles is greater than the number of bookings, then a number of dummy booking corresponding to the difference is added, each having a zero cost function, and if the number of vehicles is less than the number of bookings, then a number of bookings equal to the number of vehicles is selected in dependence on pick up times.

The cost may be determined for every booking within a predetermined booking window, utilising the vehicles that are available within that window at booking times.

The determination processing module for each combination may be configured to repeat the determination, such that the previous selection for at least one booking is replaced with a new vehicle, in dependence on a revised overall cost of booking and vehicle combinations being the lowest.

The system may be configured to replace the previous selection for more than two bookings.

For each selected combination, a determination processing module may determine a latest time by which the selected combination is to be assigned.

The invention provides an optimal vehicle assignment and dispatching technique, which dynamically assigns bookings to vehicles in real-time based on real-time available information.

The invention provides optimization using a computer based system. The computer based system iteratively re-assigns vehicles in advance, leading to a more optimal distribution based on available new information.

The system may automatically dispatch vehicles at the latest possible moment to fulfill the booking.

The invention preferably and advantageously provides optimal passenger transportation services based on multiple criteria simultaneously, both from the customer and service provider sides, with parameters changing in real time.

The invention preferably and advantageously provides optimal automatic vehicle dispatching, eliminates errors and increases the operational efficiency of the dispatcher.

Optimal assignment considers multiple criteria in matching vehicles and bookings, including customer waiting time, vehicle dead mileage, driver idle time, the type of booking (immediate or pre-booked), customer and driver grades, type of vehicle/type of service matching, and other criteria.

BRIEF DESCRIPTION OF THE FIGURES:

The invention is described by way of example with reference to the following drawings, in which:

**FIG. 1** illustrates an exemplary architecture of a vehicle booking system;

**FIG. 2** illustrates an exemplary architecture of hardware in a vehicle in the system of **FIG. 1;**

**FIG. 3** illustrates an exemplary architecture of hardware in a network infrastructure in the system of claim 1;

**FIG. 4** illustrates an exemplary process for handling booking information;

**FIG. 5** illustrates an exemplary implementation for performing the process of **FIG. 4;**

**FIG. 6** illustrates an exemplary process for handling vehicle tracking;

**FIG. 7** illustrates an exemplary implementation for performing the process of **FIG. 6;**

**FIG. 8** illustrates an exemplary process for equalising vehicles and bookings prior to an assignment process;

**FIG. 9** illustrates an exemplary process for assigning vehicles to bookings;

**FIG. 10** illustrates an exemplary implementation for performing the processes of **FIG. 8** and **FIG. 9;**

**FIG. 11** illustrates an exemplary implementation of a cost function process;

**FIG. 12** illustrates an exemplary implementation of the determination of penalties for the cost function process of **FIG. 11;**

FIG. 13 illustrates an exemplary implementation of the determination of bonuses for the cost function process of FIG. 11;

FIG. 14 illustrates an exemplary process for dispatching bookings to vehicles;

FIG. 15 illustrates an exemplary implementation for performing the process of FIG. 14; and

FIG. 16 illustrates an exemplary architecture illustrates the concurrent operation of described processes.

DESCRIPTION OF PREFERRED EMBODIMENTS:

In the examples there is described and illustrated a taxi booking system. However in general the invention applies to any vehicle fleet for which bookings are assigned to vehicles, such as any passenger vehicle fleet.

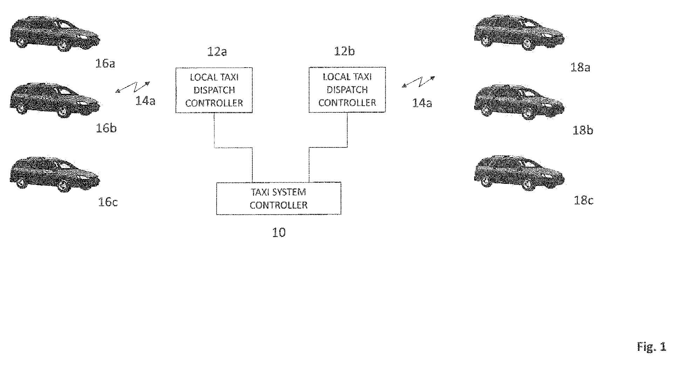

FIG. 1 illustrates the basic architecture of an exemplary booking system. There is illustrated two local taxi dispatch controllers 12a and 12b. The local taxi dispatch controllers are illustrated as connected to a central tax controller 10. Each local taxi dispatch controller 12a and 12b is associated with a respective set of taxi vehicles 16a,16b,16c and 18a, 18b, 18c. Signals 14a, 14b represent communication across a network, such as a telecommunications network, between the local taxi dispatch controller and the respective associated vehicles.

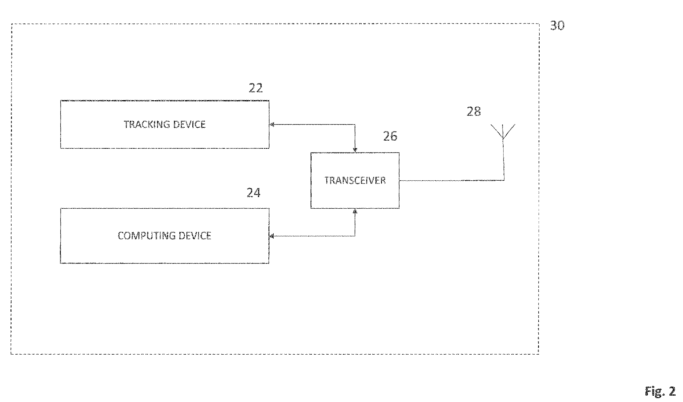

FIG. 2 illustrates the basic architecture of an exemplary implementation of hardware in any of the taxi vehicles 16a,16b,16c,18a,18b,18c of FIG. 1. The hardware generally denoted by 30 includes a tracking device and a computing device, each of which is connected by a respective bidirectional communication on a respective signal line to a transceiver 26. The transceiver 26 is connected to an antenna 28. The antenna 28 and transceiver 26 are utilised to allow wireless communication to/from the tracking device 22 and computing device 24. The wireless communication may be across a standard telecommunications wireless network.

The tracking device 22 tracks the location of the vehicle in which it is positioned, using tracking technology which may utilise GPS (global positioning system) technology for example. The tracking device transmits the location of the vehicle in which it is positioned using the transceiver 26 and antenna 28.

The computing device 24 is configured to report driver status, receive assignments, and receive commands from the dispatch controller, such as controller 12a or 12b. The communications to/from the computing device utilise the transceiver 26 and antenna 28.

Although illustrated as separate devices, the functionality of the computing device 24 and the tracking device 22 may be provided in a single device.

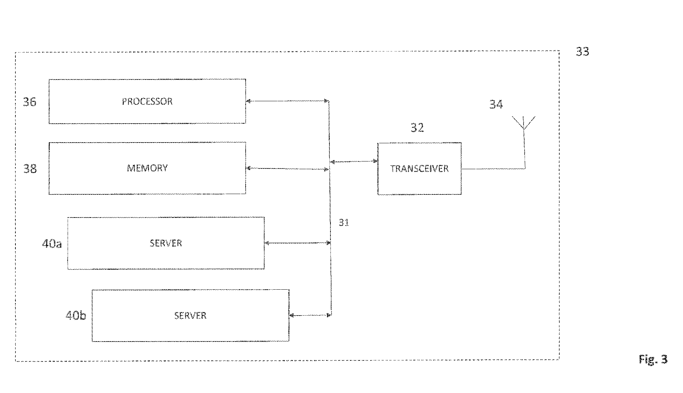

FIG. 3 illustrates the basic architecture of an exemplary implementation of hardware in a local taxi dispatch controller 12a,12b of FIG. 1. In the described example it is assumed that all of the functionality of the controller is provided in a single entity, such as the local taxi dispatch controller 12a or 12b. However it will be apparent to one skilled in the art that parts of the functionality may be distributed amongst different controllers, and where multiple local taxi dispatch controllers are commonly connected to a taxi system controller such as in FIG. 1, some of the functionality may be distributed to local taxi dispatch controllers 12a,12b, for example, and/or some of the functionality may be provided centrally in the taxi system controller 10. For example, storage may be provided by the taxi system controller 10.

The hardware generally denoted by reference numeral 33 comprises a processor 36, a memory 38, and a plurality of servers 40, two of which 40a,40b are illustrated in FIG. 3. The hardware additionally includes a transceiver 32 and an antenna 34. Each of the processor 36, the memory 38, the servers 40a,40b, and the transceiver 32 are connected via communication lines on a bus 31. The antenna 34 and transceiver 32 are utilised to allow wireless communication to/from the processor 36, memory 38 and servers 40a,40b. The wireless communication may be across a standard telecommunications wireless network.

The provisions of the servers 40a,40b, and the number of servers provided, will be implementation dependent. A server may be provided to implement each of the processing functions required in the hardware 33, as will be described below. In addition multiples servers may be provided having the same functionality so that certain processing may be performed in parallel, as will be highlighted in the following description.

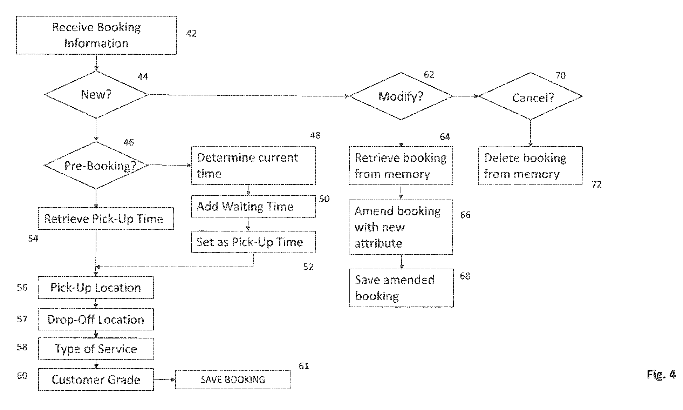

With reference to FIG. 4 there is illustrated the process flow associated with a booking.

In a step 42, booking information is received. The booking information is for a new booking, to modify an existing booking, or to cancel an existing booking. The booking information contains various attributes. An example contains five attributes: a pick-up time; a pick-up location; a drop-off location; a type of service; and a customer grade.

The pick-up time is the time of the booking pick-up, for a taxi fare the time for the fare to be picked up. The pick-up location is the location at which the booking is to be collected, for a taxi fare the location the fare is to be picked up. The drop-off location is the location at which the booking is to be dropped off. The type of service is the level of service, such as the type of vehicle (e.g. a regular car, an executive car, a minibus), and determines allowed and preferred types of service for a booking. The customer grade indicates the priority of the booking, by indicating the level of the customer, for example whether the customer is a standard customer, or a silver of gold member.

The attributes associated with a booking may vary, and not all attributes may need to be provided to establish a booking.

In a step 44 it is determined whether the received booking information is associated with a new booking. If it is associated with a new booking, then the process moves on to step 46.

In a step 46 it is determined whether the new booking is for a pre-booking or for an immediate booking.

If the new booking is for an immediate booking, then in step 48 the current time is determined, and then in step 50 an allowed waiting time is added to the current time. In step 52 the current time plus the allowed waiting time is set as the pick-up time. An immediate booking may also be referred to as an ASAP (as-soon-as-possible) booking. The allowed waiting time may be varied, and may be set differently based on, for example, the day of the week, the time of the day, or other parameters.

If the new booking is for a pre-booking, then in step 54 a pick-up time for the booking is retrieved.

After either step 54 or step 52, in step 56 a pick-up location for the booking is retrieved, in step 57 a drop-off location for the booking is retrieved, in step 58 a type of service for the booking is retrieved, and in step 60 a customer grade is retrieved.

The foregoing steps to retrieve the attributes for the booking information may be performed in any order, and may be varied according to what attributes the system allows for.

The retrieving of the attributes from the booking information may comprises parsing a booking request made on an 'app' or website, or the information may be entered manually at a computer terminal.

Once the booking information attributes have been retrieved, as denoted by step 61 the booking is saved.

If in step 44 it is determined that the booking information is not associated with a new booking, then the process moves on to step 62.

In step 62 it is determined whether the received booking information is associated with a modification to an existing booking. If it is associated with a modification to an existing booking, then the process moves on to step 64.

In 64 the existing booking is retrieved from memory. In step 66 the existing booking is amended with the new attribute. The modification may be to modify any one of the attributes or to amend multiple attributes of the booking. This may include amending a pre-booked booking to an immediate booking, which modification will comprises invoking steps 48 to 52 and then storing then updating the pick-up time.

After the booking is amended, in step 68 the amended booking is saved.

If in step 62 it is determined that the booking information is not associated with a modification to an existing booking, then the process moves on to step 70.

In step 70 it is determined whether the received booking information is associated with a cancelation of an existing booking. If it is associated with a cancellation of an existing booking, then the process moves on to step 72.

In step 72 the existing booking is deleted from memory.

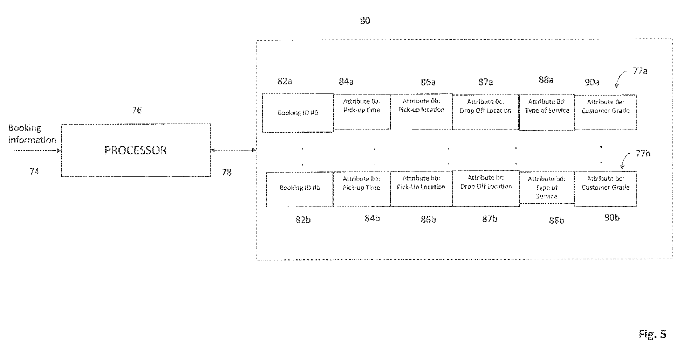

**FIG. 5** illustrates an example implementation of hardware within the booking controller, such as the dispatch controller 12a, for implementing the process of **FIG. 4.** This hardware is a customer booking module.

A processor 76 receives booking information on a signal line 74, and communicates with a memory 80. The memory 80 stores a set of booking identifiers associated with the bookings. Each booking identifier is associated with the attributes for that booking, including a first attribute being the pick-up time, a second attribute being the pick-up location, a third attribute being the drop-off location, a fourth attribute being the type of service, and a fifth attribute being the customer grade. The number of booking identifiers stored in memory corresponds to the number of bookings made, and a new booking identifier is created for each new booking.

As shown in **FIG. 5,** a booking identifier 77a comprises a booking ID field 82a having a value #0, a first attribute field 84a having a value 0a, a second attribute field 86a having a value 0b, a third attribute field 87a having a value 0c, a fourth attribute 88a field having a value 0d, and a fifth attribute field 90a having a value 0e.

In general a booking identifier 77b comprises a booking ID field 82b having a value #b, a first attribute field 84b having a value ba, a second attribute field 86b having a value bb, a third attribute field 87b having a value bc, a fourth attribute 88b field having a value bd, and a fifth attribute 90b field having a value be.

The processor 76 maintains the list of bookings, receiving and processing all booking related information in real-time. The processor 76 is configured to create and store booking identifiers into the memory 80, to access and retrieve booking identifiers from the memory 80 in order to modify them, and to cancel booking identifiers from the memory 80 by deletion.

A server, such as one of servers 40a, 40b may be provided to provide the functionality of the bookings process to operate in conjunction with the processor 36 and memory 38. Parallel processing of bookings may be provided, for example utilising multiple servers operating in parallel.

The processor 76 may be the processor 36 of **FIG. 3** or may be an additionally provided processor. The memory 80 may be part of the memory 38 of **FIG. 3** or may be an additionally provided memory.

The customer booking module may be implemented in software.

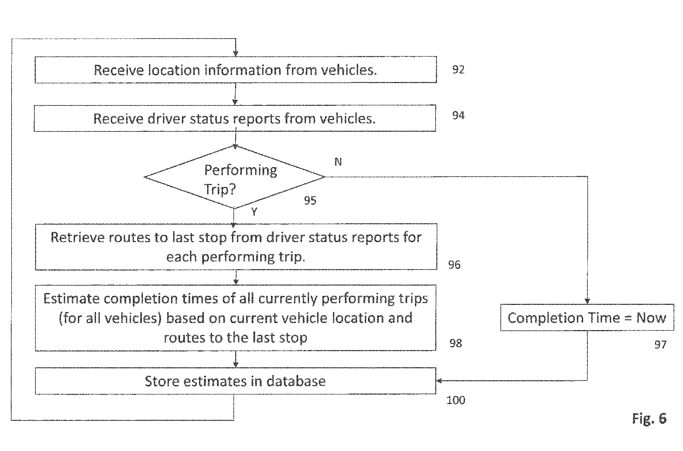

With reference to **FIG. 6** there is illustrated a process flow associated with vehicle tracking.

In a step 92 location information is received from a vehicle.

In a step 94 a driver status report is received from a vehicle. In implementations the location information may be included within the driver status report.

In a step 95 a determination is made as to whether the vehicle is performing a trip.

If the vehicle is performing a trip, then in a step 96 the route to the last stop or destination for a vehicle performing a trip is retrieved from the driver status report. This is the navigational route which the driver of the vehicle is following.

Each of steps 92, 94, 96 and 98 is performed for all vehicles.

In a step 98, based on the current location of the vehicle, and the route to the last stop from the driver status report, an estimate is made of the completion time for the trip being currently performed by the vehicle.

In a step 100 the estimates thus calculated are stored in memory.

If in step 92 it is determined that a vehicle is not performing a trip, then in a step 97 the completion time for that vehicle is set to "now', and that information for that vehicle is stored in the database, along with the estimates, in step 100.

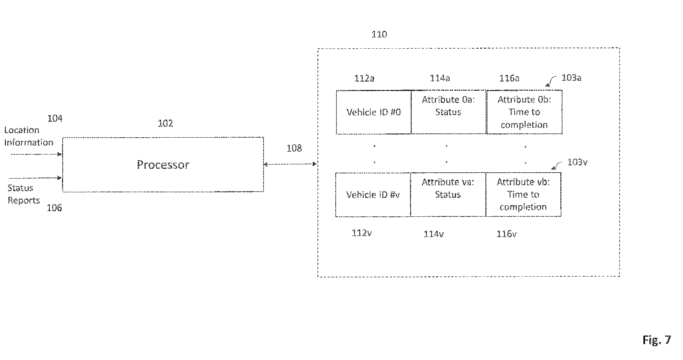

**FIG. 7** illustrates an example implementation of hardware within the booking controller, such as the dispatch controller 12a, for implementing the vehicle tracking process of **FIG. 6.** This hardware is a vehicle tracking module.

A processor 102 receives location information on a signal line 104 and status reports on a signal line 106, and communicates with a memory 110. The memory 110 stores a set of vehicle identifiers associated with vehicles. Each vehicle identifier is associated with attributes for that vehicle, including a first attribute being the status, and a second attribute being the time to completion. The status indicates whether the vehicle is available or unavailable. If it is unavailable it may be performing a trip associated with a booking, such as transporting a passenger or on the way to collect a passenger. Thus a vehicle may be unoccupied but performing a trip associated with a booking, e.g. dispatched to pick-up a customer, and thus unavailable.

As shown in **FIG. 7,** a vehicle identifier 103a comprises a vehicle ID field 112a having a value #0, a first attribute field 114a having a value 0a, and a second attribute field 116a having a value 0b. In general a vehicle identifier 103v comprises a vehicle ID field 112v having a value #v, a first attribute field 114v having a value va, and a second attribute field 116v having a value vb.

The processor 102 maintains the list of vehicles, receiving and processing all location information and status reports in real-time. The processor 102 is configured to create and store vehicle identifiers into the memory 110.

A server, such as servers 40a, 40b may be provided to provide the functionality of the vehicle tracking process to operate in conjunction with the processor 36 and memory 38.

The processor 102 may be the processor 36 of **FIG. 3** or may be an additionally provided processor. The memory 110 may be part of the memory 38 of **FIG. 3** or may be an additionally provided memory.

The vehicle tracking module may be implemented in software.

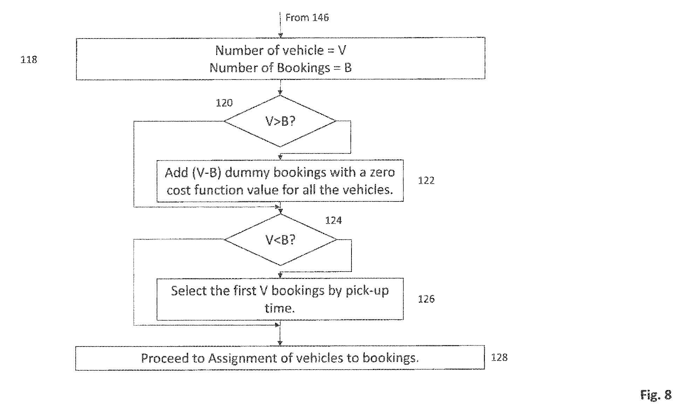

With reference to **FIG. 8** there is illustrated a process flow associated with equalisation of vehicles and bookings. This equalisation process is a preliminary process before vehicle assignment to bookings.

In a step 118 the number of vehicles is set at V and the number of bookings is set at B.

In a step 120 it is determined whether V>B. If this condition is met, then in a step 122 (V-B) dummy booking are added in order to equalise the number of vehicles with the number of bookings. As will be discussed further below, a cost function value will be determined for each vehicle-booking combination, and those combinations associated with a dummy booking are allocated a cost function value of zero.

If in step 120 it is determined that the condition V>B is not met, then in step 124 it is determined whether the condition V<B is met. If this condition is met, then in a step 126 V of the total B bookings are selected. The first V bookings may be selected, e.g. based on the bookings having the pick-up times nearest to the current time.

At this point if either V>B or V<B the number of bookings and the number of vehicles are equalized. If V=B the numbers are equal anyway, so no equalisation is required.

In step 128 a modified set of vehicles/bookings has been established if the original numbers were unequal, and based on this modified set the process can proceed to assignment of vehicles to bookings. If the number of bookings matched the number of vehicles, the original set of vehicles/bookings is used for assignment.

The equalisation process is only enabled if the number of vehicles and the number of bookings is not equal.

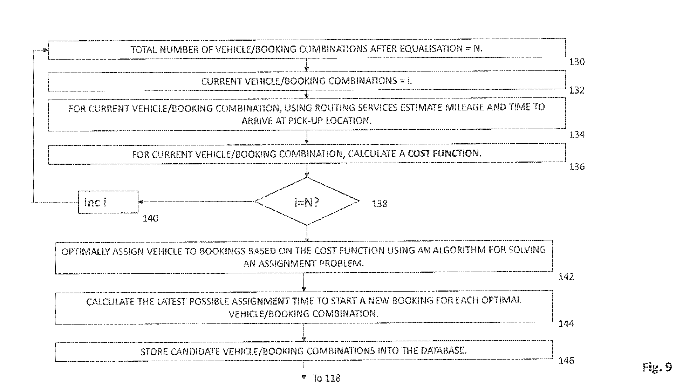

With reference to **FIG. 9** there is illustrated a process flow associated with assignment of vehicles to bookings, preferably after the equalisation process of **FIG. 8.** The assignment process is based on all currently available vehicles (whether performing trips or idle) and all non-dispatched bookings which are within a specified planning time-window. Every possible combination is processed: every possible vehicle with every possible booking.

In a step 130 the total number of vehicle/booking combinations is defined as N. This is defined after the equalisation process of **FIG. 8.** N is equal to VxB.

In a step 132 a current vehicle/booking combination is set at i.

In a step 134, for a current vehicle/booking a combination, an estimate is determined of the mileage and time-to-arrive at the pick-up location. This mileage is the mileage from the current location to the pick-up location for available vehicles, and from the last-stop location to the pick-up location for vehicles currently performing a trip. This can be considered 'dead' mileage, in so far as it is not mileage associated with the booking itself. Based on this mileage the time to arrive at the pick-up location may also be estimated. In general any appropriate parameter for vehicle/booking combinations may be determined.

Following such determination, for a current vehicle/booking combination a cost function is determined in step 136. The determination of the cost function is described further hereinbelow.

In a step 138 it is then determined whether the current vehicle/booking combination is the last one of all the combinations, i.e. whether i=N. If not, then in a step 140 i is incremented and then steps 132 to 136 are repeated for the next vehicle/booking combination.

After the cost function has been determined for all vehicle/booking combinations, then in step 142 bookings are assigned to vehicles based on the cost function, using an algorithm for solving an assignment problem. An example algorithm is the Hungarian algorithm. Bookings are assigned to vehicles simultaneously based on total (summary) cost.

It can be noted here that a selection algorithm is necessary since it is not possible to select an optimal combination for each booking separately. If there is more than one booking and there is more than one vehicle, it is not always possible to choose the optimal booking/vehicle combination for each booking. There can be (and almost certainly will be) a situation where the same vehicle is the best choice for more than one booking. As it is not possible to assign one vehicle to several bookings at the same time, some further optimization is needed, which is where the cost function is used by the chosen assignment. Thus it is necessary to optimize the total cost of all assigned combinations (i.e. the sum of costs for all assigned combinations), and assign the whole set of combinations simultaneously.

An example may be considered. A simple scenario is considered where there are two bookings and two vehicle. Table 1 shows the determined cost booking/vehicle combinations.

Table 1

| Bookings /Vehicles | V1 | V2 |
|---|---|---|
| B1 | 5 | 15 |
| B2 | 4 | 8 |

As can be seen in Table 1, vehicle V1 is the best choice for both booking B1 and booking B2. Therefore it is necessary to assign a more costly combination for one of bookings than the optimum choice.

A first non-optimal set of combinations is to assign booking B1 to vehicle V2, and assign booking B1 to vehicle B2. The total cost of such assignment is 15 + 4 = 19.

A second non-optimal set of combinations is to assign booking vehicle B1 to vehicle V1, and assign booking B2 to vehicle V2 . The total cost of such assignment is 5 + 8 = 13.

Thus, in this example, the second non-optimal set of combinations is chosen, on the basis that this minimizes the overall cost combinations (to 13 rather than 19).

For the same reason, it is not possible to replace only one booking/vehicle combination in a previously selected set of combinations: all combinations must be assessed. A new full set of optimal combinations must be selected based on new cost function values.

Following step 142, for each vehicle/booking combination one option has been selected. In step 144 for this selected combination the latest possible assignment time to start the booking is calculated.

The selected candidate vehicle/booking combination is then stored as denoted by step 146, together with the associated latest possible assignment time.

The equalisation process of steps 118 to 128 and the assignment process of steps 130 to 14 are iteratively processed using the last available data on bookings and vehicle status. This iterative nature is illustrated in **FIG. 9** by showing that after step 146 the method returns to step 118 of **FIG. 8.**

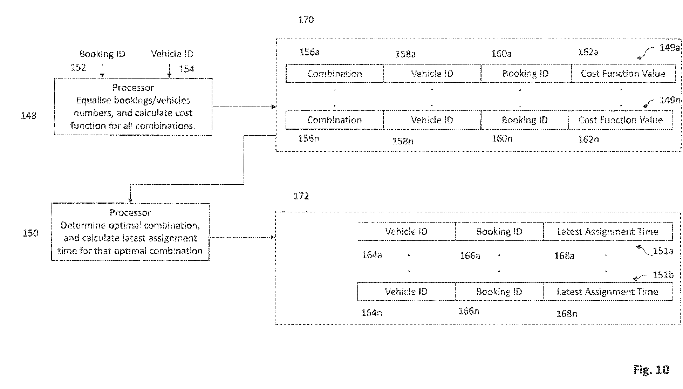

**FIG. 10** illustrates an example implementation of hardware within the booking controller, such as the dispatch controller 12a, for implementing the equalisation process of **FIG. 8** and the assignment process of **FIG. 9.** This hardware is a vehicle assignment module.

A processor 148 receives the booking identifiers on a communication line 152 and the vehicle identifiers on a communication line 154. The booking identifiers are received from memory 80 **(FIG. 5)** and the vehicle identifiers are received from memory 110 **(FIG. 7).**

The processor 148 creates and stores the sets of combinations in a memory 170. The processor 148 controls the determination of the cost function for each combination which is stored in the memory 170 with the associated combination.

As shown, a first combination 149a includes a combination identifier 156a, a vehicle identifier 158a, a booking identifier 160a, and an associated calculated cost function value 162a. In general a combination 149n includes a combination identifier 156n, a vehicle identifier 158n, a booking identifier 160n, and an associated calculated cost function value 162n.

A processor 150 analyses the stored vehicles/bookings combinations and their associated cost function values stored in memory 170, and determines the optimal set of vehicles/bookings combinations for current cost function values. For the optimal combination, the latest assignment time is calculated.

The processor 150 creates and stores in a memory 172 the sets of combinations.

As shown, a first optimal combination includes a vehicle identifier 164a, a booking identifier 166a, and a latest assignment time 168a. In general an optimal combination includes a vehicle identifier 164n, a booking identifier 166n, and a latest assignment time 168n.

A server, such as servers 40a, 40b may be provided to provide the functionality of the equalization process to operate in conjunction with the processor 36 and memory 38.

A server, such as servers 40a, 40b may be provided to provide the functionality of the assignment process to operate in conjunction with the processor 36 and memory 38.

Multiple parallel processors may be provided to allow certain calculations to be determined in parallel for the multiple options. For example: multiple parallel servers may be utilised for estimating the mileage and time to arrive at the pickup location for each vehicle/booking combination; and/or multiple parallel servers may be utilised to calculate the cost function for each vehicle/booking combination. The use of multiple servers to allow parallel processing decreases optimisation time.

The processors 148 and 150 may be the processor 36 of **FIG. 3** or may be additionally provided processors. The memory 170 or the memory 172 may be part of the memory 38 of FIG. 3 or may be an additionally provided memory.

The vehicle assignment module may be implemented in software.

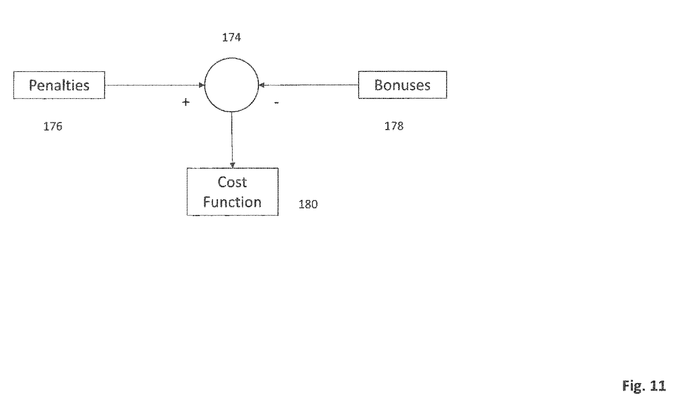

**FIG. 11** illustrates the principle of determining the cost function. A combiner 174 combines the sum of all the penalties as represented by block 176 minus the sum of all the bonuses as represented by block 178. The output block 180 is the cost function value for the combination.

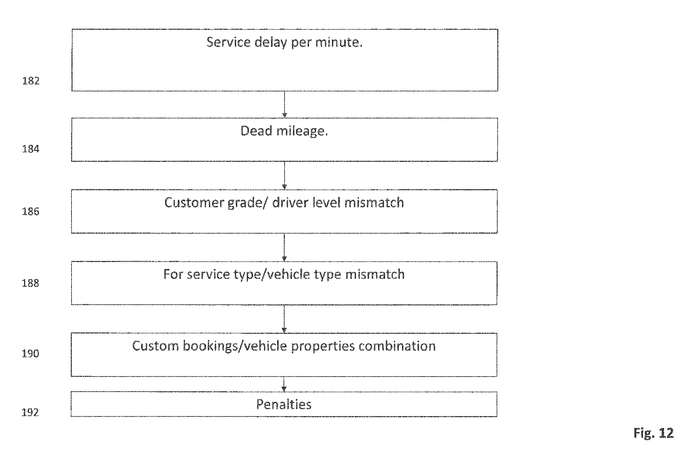

**Fig. 12** illustrates an example process for determining the sum of all the penalties.

In a step 182 the service delay penalty is determined. The service delay penalty is the time-to-arrive at the pick-up location determined in step 134 of **FIG. 9.** This is picked out, because routing services are very computing power-consuming, and the possibility to use as many parallel servers as required on this step is a big advantage of this method. The service delay penalty may be calculated with the formula:

```
Total service delay penalty = [service delay (minutes)] x
[service delay per minute]
```

This can be different for different customer grades. This can also be different for pre-bookings and immediate bookings.

In a step 184 the 'dead mileage' penalty is determined. The 'dead mileage' penalty is determined in step 134 of **FIG. 9.** This may be per mile or per kilometre. The dead mileage is the mileage that has to be travelled to the pick-up location. The dead mileage penalty may be calculated using the following formula:

```
Total dead mileage penalty = [dead mileage] x [dead mileage
penalty per km or mile]
```

In a step 186 the penalty for customer grade/driver level mismatch is determined. This is determined for each unwanted combination, i.e. it is only determined if a mismatch exists in the booking combination, where the driver level for the combination does not match the customer grade associated with the booking.

In a step 188 the service type/vehicle type mismatch penalty is determined. This is determined for each unwanted combination, i.e. it is only determined if a mismatch exists in the booking combination, where the vehicle for the combination does not match the service type associated with the booking.

In a step 190 the customer bookings/vehicle properties combination penalty is determined. This is determined for each unwanted combination.

In a step 192 the total penalties is then determined based on the determinations made in the foregoing steps.

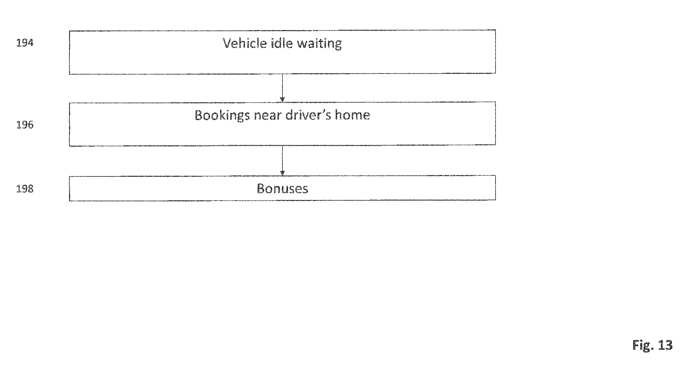

**Fig. 13** illustrates the process for determining the sum of all the bonuses.

In step 194 it is determined the vehicle idle waiting time, which may be determined on a per minute basis.

In step 196 it is determined (preferably when a job is the last job on a driver's shift) the proximity of the booking to the driver's home.

In a step 198 the total bonuses is then determined based on the determinations made in the foregoing steps.

The penalties and bonuses lists are not limited to the ones described above. Any penalties and bonuses based on booking/vehicle properties can be used. Also current penalties and bonus values can be adjusted in real time based on actual properties (e.g. minimisation of 'dead' mileage versus minimisation of service delay).

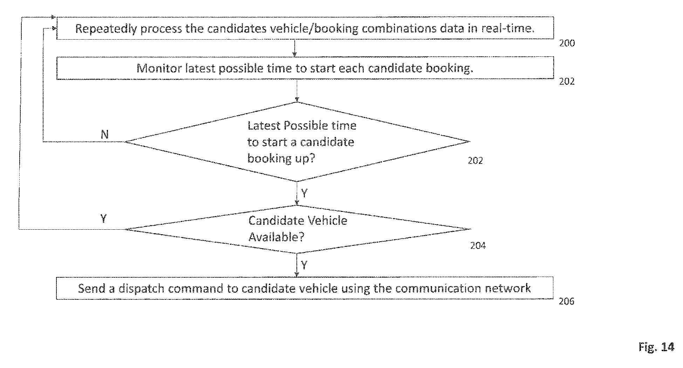

With reference to **FIG. 14** there is illustrated a process flow associated with dispatch of vehicles for bookings.

As denoted by step 200, the candidate vehicle/bookings combination are repeatedly processed in real-time, which as noted above comprises iterating step 118 to 146.

As denoted by step 202, whilst this repeat processing is ongoing the latest possible assignment time for each optimal booking is monitored.

In step 202 it is determined whether the latest possible assignment time for each optimal combination has been reached or not, the steps 200 and 202 are repeated.

If it is determined in step 202 that the latest possible assignment time has been reached, than in step 204 it is determined if the vehicle associated with the optimal combination is available or unavailable, and if so in a step 206 an appropriate dispatch instruction is sent to the vehicle associated with the optimal combination, using the communication network.

If in step 204 it is determined that the vehicle associated with the optimal combination is not available, then the booking is not dispatched and is referred to the process 200 for optimal assignment in the next iteration.

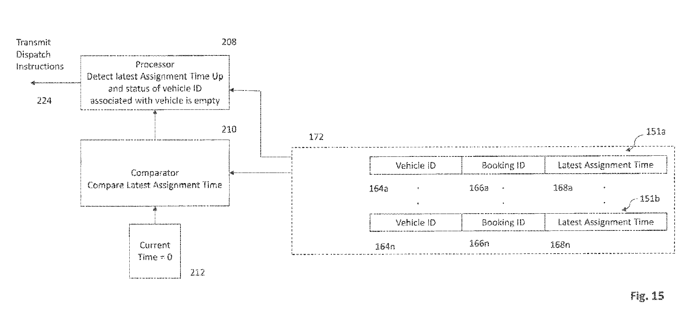

**FIG. 15** illustrates an example implementation of hardware within the booking controller, such as the dispatch controller 12a, for implementing the dispatch process of **FIG. 14.**

A processor 208 is connected to the memory 172 of **FIG. 10.** A comparator 210 additionally connects to the memory 172, and compares the latest assignment time of each combination to a current time provided by block 212. When the latest assignment time matches the current time, the associated combination is retrieved from memory and the processor determines, from the status provided by the vehicle, if the vehicle associated with the combination is available. If the vehicle is unavailable, the dispatch instructions are transmitted on communication signal line 224.

A server, such as servers 40a, 40b may be provided to provide the functionality of the dispatch process to operate in conjunction with the processor 36 and memory 38.

The processor 208 may be the processor 36 of **FIG**. **3** or may be an additionally provided processor.

The vehicle dispatch module may be implemented in software.

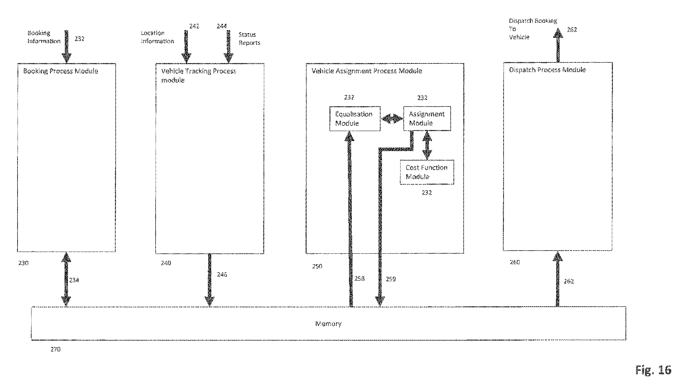

**FIG. 16** shows an architecture illustrating the concurrent and iterative operation of the foregoing processes in an exemplary booking and dispatching system.

The booking and dispatching system generally denoted by reference numeral 280 includes a booking process module 230, a vehicle tracking process module 240, a vehicle assignment module 250, and a dispatch process module 260. Each of these modules 230, 240, 250, and 260 is connected to a memory 270.

The booking process module 230 receives booking information on communication interface 232, and is provided with an interface 234 to the memory 170.

The vehicle tracking process module 240 receives vehicle information comprising location information and status reports on communication lines 242 and 244 respectively, and provides data on an interface 246 to the memory 270.

The vehicle assignment process module 250 comprises an equalisation module 252, an assignment module 254, and a cost function module 256. The equalisation module 252 receives data from the memory 270 on communication lines 258, and provides data to the assignment module 254. The assignment module also communicates with the cost function module 256. The assignment module 254 provide data on communication lines 259 to the memory 270.

The dispatch process module receives data from the memory 270 on communication interface 262, and provides dispatch commands comprising dispatching bookings on communication lines 262 to vehicles.

Each of the modules 230, 240, 250 and 260 can concurrently operate to process data. The module 250 processes data iteratively.

The methods and processes of the invention may be implemented in software, and may comprises of computer program code which, when executed on a computer, causes the computer to implement any described method or processes. A computer program product may store such computer program code.

The invention has been described by way of various examples. The invention is not limited to any specific example, or the details of any example. The invention is not limited to aspects of any embodiment being implemented in combination.

**Claims**

1. A method of allocating a set of bookings to a set of vehicles, comprising determining a cost associated with all combinations of booking and vehicle, and selecting a vehicle for each booking in dependence on an overall cost of booking/vehicle combinations being the lowest.

2. The method of claim 1 wherein the number of bookings and the number of vehicles are equalised before the cost determination, wherein if the number of vehicle is greater than the number of bookings, then a number of dummy booking corresponding to the difference is added, each having a zero cost function, and if the number of vehicles is less than the number of bookings, then a number of bookings equal to the number of vehicles is selected in dependence on pick up times.

3. The method of claim 1 or claim 2 wherein the cost is determined for every booking within a predetermined booking window, utilising the vehicles that are available within that window at booking times.

4. The method of any one of claims 1 to 3 further comprising repeating the cost determination for each combination, such that the previous selection for at least one booking is replaced with a new vehicle, in dependence on a revised overall cost of booking and vehicle combinations being the lowest, wherein the previous selection for more than two bookings are replaced.

5. The method of any one of claims 1 to 4 wherein for each selected combination, a determination is made of the latest time by which the selected combination is to be assigned.

6. The method of claim 5 wherein at said latest time the vehicle of the combination is dispatched to the booking of the combination, wherein if the vehicle is unavailable at said latest time, the cost determination is repeated including said booking.

7. The method of any one of claims 1 to 6 in which the cost is determined in dependence on vehicle data and booking data.

8. The method of any one of claims 1 to 7 in which the cost of a booking/vehicle combination is increased in dependence on one or more of: a service delay per minute; dead mileage; customer grade/driver level mismatch; service type/vehicle type mismatch; and custom bookings/vehicle properties combination.

9. The method of any one of claims 1 to 8 in which the cost of a booking/vehicle combination is decreased in dependence on one or more of: vehicle idle waiting time; and a booking being near to a driver's home.

10. The method of any one of claims 1 to 9 further comprising receiving booking information, and storing attributes associated with the booking information, wherein the booking information includes one or more of: a pick-up location; a drop-off location; a type of service; and a customer grade.

11. The method of claim 10 further wherein a booking is a pre-booking for a predetermined time or an as-soon-as-possible booking, wherein for an as-soon-as-possible booking, a booking time is set as the current time plus a waiting time.

12. The method of any one of claims 1 to 11 further comprising monitoring and storing the location and status of each vehicle.

13. The method of any one of claims 1 to 12 comprising retrieving routes to last stop from driver status reports for each performing trip, and estimating a completion time of all currently performing trips based on current vehicle location and routes to the last stop.

14. A computer program product for storing computer program code which, when executed on a computer, performs the method of any one of claims 1 to 13.

15. A system for allocating a set of bookings to a set of vehicles, comprising: a determination processing module for determining a cost associated with all combinations of booking and vehicle, and a selection processing module for selecting a vehicle for each booking in dependence on an overall cost of booking/vehicle combinations being the lowest.

16a

12a

LOCAL TAXI
DISPATCH
CONTROLLER

14a

16b

16c

12b

LOCAL TAXI
DISPATCH
CONTROLLER

14a

18a

18b

18c

TAXI SYSTEM
CONTROLLER

10

Fig. 1

Fig. 2

Fig. 3

Receive Booking Information | 42

New? | 44

Modify? | 62

Cancel? | 70

Pre-Booking? | 46

Determine current time | 48

Retrieve booking from memory | 64

Delete booking from memory | 72

Add Waiting Time | 50

Amend booking with new attribute | 66

Retrieve Pick-Up Time | 54

Set as Pick-Up Time | 52

Save amended booking | 68

Pick-Up Location | 56

Drop-Off Location | 57

Type of Service | 58

Customer Grade | 60

SAVE BOOKING | 61

Fig. 4

80

| 82a | 84a | 86a | 87a | 88a | 90a | 77a |
|---|---|---|---|---|---|---|
| Booking ID #0 | Attribute 0a: Pick-up time | Attribute 0b: Pick-up location | Attribute 0c: Drop Off Location | Attribute 0d: Type of Service | Attribute 0e: Customer Grade | |

Booking Information

74

76

**PROCESSOR**

78

| Booking ID #b | Attribute ba: Pick-Up Time | Attribute bb: Pick-Up Location | Attribute bc: Drop Off Location | Attribute bd: Type of Service | Attribute be: Customer Grade | 77b |
|---|---|---|---|---|---|---|
| 82b | 84b | 86b | 87b | 88b | 90b | |

Fig. 5

Receive location information from vehicles.    92

Receive driver status reports from vehicles.    94

Performing Trip?    N    95    Y

Retrieve routes to last stop from driver status reports for each performing trip.    96

Estimate completion times of all currently performing trips (for all vehicles) based on current vehicle location and routes to the last stop    98

Completion Time = Now    97

Store estimates in database    100

Fig. 6

Fig. 7

118

From 146

Number of vehicle = V
Number of Bookings = B

120

V>B?

Add (V-B) dummy bookings with a zero
cost function value for all the vehicles.

122

124

V<B?

Select the first V bookings by pick-up
time.

126

Proceed to Assignment of vehicles to bookings.

128

Fig. 8

TOTAL NUMBER OF VEHICLE/BOOKING COMBINATIONS AFTER EQUALISATION = N.
130

CURRENT VEHICLE/BOOKING COMBINATIONS = i.
132

FOR CURRENT VEHICLE/BOOKING COMBINATION, USING ROUTING SERVICES ESTIMATE MILEAGE AND TIME TO ARRIVE AT PICK-UP LOCATION.
134

FOR CURRENT VEHICLE/BOOKING COMBINATION, CALCULATE A COST FUNCTION.
136

Inc i
140

i=N?
138

OPTIMALLY ASSIGN VEHICLE TO BOOKINGS BASED ON THE COST FUNCTION USING AN ALGORITHM FOR SOLVING AN ASSIGNMENT PROBLEM.
142

CALCULATE THE LATEST POSSIBLE ASSIGNMENT TIME TO START A NEW BOOKING FOR EACH OPTIMAL VEHICLE/BOOKING COMBINATION.
144

STORE CANDIDATE VEHICLE/BOOKING COMBINATIONS INTO THE DATABASE.
146

To 118

Fig. 9

170

Booking ID    Vehicle ID
152 |          | 154

| Processor Equalise bookings/vehicles numbers, and calculate cost function for all combinations. |
| --- |

148

| 156a | 158a | 160a | 162a | 149a |
| --- | --- | --- | --- | --- |
| Combination | Vehicle ID | Booking ID | Cost Function Value | |
| . | . | . | . | 149n |
| . | . | . | . | |
| Combination | Vehicle ID | Booking ID | Cost Function Value | |
| 156n | 158n | 160n | 162n | |

172

150

| Processor Determine optimal combination, and calculate latest assignment time for that optimal combination |
| --- |

| Vehicle ID | Booking ID | Latest Assignment Time | |
| --- | --- | --- | --- |
| 164a . | 166a . | 168a . | 151a |
| . | . | . | 151b |
| Vehicle ID | Booking ID | Latest Assignment Time | |
| 164n | 166n | 168n | |

Fig. 10

20

174

Penalties

+

176

Bonuses

-

178

Cost
Function

180

Fig. 11

EP 3 147 836 A1

```
┌────────────────────────────────────┐
│        Service delay per minute.    │
│                                     │
└────────────────────────────────────┘
                    │
                    ▼
┌────────────────────────────────────┐
│            Dead mileage.            │
│                                     │
└────────────────────────────────────┘
                    │
                    ▼
┌────────────────────────────────────┐
│  Customer grade/ driver level mismatch │
│                                     │
└────────────────────────────────────┘
                    │
                    ▼
┌────────────────────────────────────┐
│  For service type/vehicle type mismatch │
│                                     │
└────────────────────────────────────┘
                    │
                    ▼
┌────────────────────────────────────┐
│ Custom bookings/vehicle properties combination │
│                                     │
└────────────────────────────────────┘
                    │
                    ▼
┌────────────────────────────────────┐
│              Penalties              │
└────────────────────────────────────┘
```

Fig. 12

22

194 | Vehicle idle waiting

196 | Bookings near driver's home

198 | Bonuses

Fig. 13

Repeatedly process the candidates vehicle/booking combinations data in real-time. — 200

Monitor latest possible time to start each candidate booking. — 202

N — Latest Possible time to start a candidate booking up? — 202

Y

Y — Candidate Vehicle Available? — 204

Y

Send a dispatch command to candidate vehicle using the communication network — 206

Fig. 14

Transmit
Dispatch
Instructions

208

Processor
Detect latest Assignment Time Up
and status of vehicle ID
associated with vehicle is empty

224

210

172

151a

Comparator
Compare Latest Assignment Time

| Vehicle ID | Booking ID | Latest Assignment Time |
|---|---|---|
| 164a | 166a | 168a |

151b

| Vehicle ID | Booking ID | Latest Assignment Time |
|---|---|---|
| 164n | 166n | 168n |

Current
Time = 0

212

Fig. 15

25

EP 3 147 836 A1

Fig. 16

26

Europäisches
Patentamt

European
Patent Office

Office européen
des brevets

## EUROPEAN SEARCH REPORT

Application Number

EP 16 19 0295

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/041675 A1 (JULIVER STEVEN [US] ET AL) 16 February 2012 (2012-02-16) * the whole document * | 1-15 | INV. G06Q10/06 G06Q30/00 |
| X | US 2014/074757 A1 (DE GENNARO STEVEN V [US] ET AL) 13 March 2014 (2014-03-13) * the whole document * | 1-15 | |
| X | WO 2004/044767 A1 (TRANSPORTOPIA INC [US]) 27 May 2004 (2004-05-27) * the whole document * | 1-15 | |
| X | WO 2014/036335 A1 (INTEGRITY VEHICLE SOLUTIONS COMPANY LLC [US]) 6 March 2014 (2014-03-06) * the whole document * | 1-15 | |

TECHNICAL FIELDS
SEARCHED     (IPC)

G06Q

The present search report has been drawn up for all claims

| Place of search | Date of completion of the search | Examiner |
|---|---|---|
| Munich | 7 November 2016 | Anastasov, Yuliyan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 19 0295

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2016

| Patent document cited in search report | | Publication date | Patent family member(s) | | Publication date |
|---|---|---|---|---|---|
| US 2012041675 | A1 | 16-02-2012 | NONE | | |
| US 2014074757 | A1 | 13-03-2014 | NONE | | |
| WO 2004044767 | A1 | 27-05-2004 | AU 2003272646 A1<br>US 2004117332 A1<br>WO 2004044767 A1 | | 03-06-2004<br>17-06-2004<br>27-05-2004 |
| WO 2014036335 | A1 | 06-03-2014 | US 2014067491 A1<br>WO 2014036335 A1 | | 06-03-2014<br>06-03-2014 |

EPO FORM P0459

For more details about this annex : see Official Journal of the European Patent Office, No. 12/82